# EUROPEAN PATENT SPECIFICATION

(11) **EP 3 030 431 B1**
(45) Date of publication and mention of the grant of the patent: **27.03.2019**
(21) Application number: 14752424.3
(22) Date of filing: 14.07.2014
(51) Int. Cl.: B60C 9/00, B60C 9/22, D02G 3/48

(54) **METHOD FOR INCREASING THE PERFORMANCES OF A TYRES FOR VEHICLE WHEELS AND TYRE FOR VEHICLE WHEELS**
VERFAHREN ZUR ERHÖHUNG DER LEISTUNGEN VON REIFEN FÜR FAHRZEUGRÄDER UND REIFEN FÜR FAHRZEUGRÄDER
PROCÉDÉ PERMETTANT D'AUGMENTER LES PERFORMANCES D'UN PNEU POUR DES ROUES DE VÉHICULE, ET PNEU POUR DES ROUES DE VÉHICULE

(30) Priority: 08.08.2013 IT MI20131368
(43) Date of publication of application: 15.06.2016
(73) Proprietor: Pirelli Tyre S.p.A., 20126 Milano (IT)
(72) Inventor: RAMPANA, Barbara, I-20126 Milano (IT); BIZZI, Stefano, I-20126 Milano (IT); BRIVIO, Fiorenzo, I-20126 Milano (IT); GRASSI, Lisa, I-20126 Milano (IT)
(74) Representative: Brasca, Marco
(86) International application number: PCT/IB2014/063082
(87) International publication number: WO 2015/019214

(56) References cited:
- EP-A1- 2 065 222
- US-A- 4 155 394
- US-B1- 6 601 378
- US-B2- 6 799 618

## Description

### Field of the art

The present invention has as object a method for increasing the performances of a tyre for vehicle wheels. The invention also refers to a tyre for vehicle wheels, in particular to a UHP (Ultra High Performance) racing tyre, more generally to a tyre that equips the drive wheels (usually the rear wheels) of ultra high performance vehicles. Such vehicles are capable of achieving high drive performances, with maximum power on the order of hundreds of horsepower (500-1000 CV) and maximum torque of hundreds of Nm (500-1000 Nm).

### State of the art

A tyre for vehicle wheels generally comprises a carcass structure associated with a belt structure. In radially outer position with respect to the belt structure, a tread band is arranged. The tyres of UHP (Ultra High Performance) type are typically provided with a belt structure provided with a radially outer reinforcement layer comprising reinforcement cords arranged according to a substantially zero angle with respect to a circumferential direction of the tyre incorporated in an elastomeric material.

The radially outer reinforcement layers of the UHP tyres can comprise cords of hybrid type obtained with aramid yarns and nylon yarns. Examples of tyres of such type are provided for example in the document WO2005002884 on behalf of the Applicant and in the documents EP 0 571 204, US 6799618, US 7337817, US 6533012 and EP 2 065 222.

In WO2005002884, a tyre is described comprising a belt layer comprising at least one first elongated element and at least one second elongated element, said elongated elements being spirally wound along a substantially circumferential direction of the tyre, the first and the second elongated element are alternately arranged along the axial extension of the belt layer, the first elongated element being a hybrid cord comprising at least one filament with high elastic modulus and one filament with low elastic modulus twisted together and the second elongated element having a lower elastic modulus than the elastic modulus of said first elongated element.

In EP 0 571 204, a tyre is described comprising a belt structure and a circumferential reinforcement belt layer that consists of superimposed strips in the shoulder zone comprising a hybrid material consisting of polyaramid and polyamide and of a conventional intermediate reinforcement layer arranged between the two shoulder reinforcement layers.

The document US 6799618 illustrates a tyre which comprises a radial carcass, a tread band and a reinforcement structure interposed between the tread band and the carcass. The reinforcement structure comprises a belt structure provided with two belt plies and one or two layers that are radially outer with respect to the reinforced belt plies with hybrid cords of nylon (940 dTex) and aramid (1100 dTex) that form an angle comprised between 0 and 5 degrees with respect to a circumferential direction of the tyre.

The document US 7337817 shows a radial tyre comprising at least one belt layer in which one or more rubber-covered cords are spirally wound, nearly in parallel with a circumferential direction of the tyre itself. The cord of the belt is a hybrid cord obtained by twisting a band of aramid fibres (1100 dTex) with a band of nylon fibres (940 dTex).

The document US 6533012 shows a tyre comprising a crown structure provided with at least one reinforcement ply with parallel reinforcement cords oriented with an angle comprised between about 10 and about 45 degrees with respect to a circumferential direction and at least one ply of textile cords spirally wound and circumferentially oriented. The textile cords can be of aramid (1670 dTex) - nylon (1400 dTex) hybrid type.

The document EP 2 065 222 shows a tyre of radial type provided with an auxiliary reinforcement layer constituted by a hybrid cord of organic fibre wound around an outer peripheral surface of the belt layers in a circumferential direction. The organic fibre cord is obtained by twisting a yarn with high elastic modulus (greater than 10000 MPa), such as aramid 1100 dTex, with a yarn with low elastic modulus made of nylon (940 dTex).

Document US 4 155 394 discloses a cord composite suitable for rubber tire reinforcement comprised of a plurality of plies of yarns selectively cabled in a manner so that, upon application of longitudinal stress, at the initial elongation of the cable, the primary load bearing ply is a polyester or a nylon yarn and so that after appreciable elongation of the cable, the primary load bearing yarn is an aramid yarn.

Document US 6 601 378 discloses a hybrid cabled cord comprising: at least two yarns having different properties, and an unbalanced configuration wherein the hybrid cabled cord has improved tensile strength retention. One of the two yarns comprises polyethylene terephthalate and the second of at least two yarns comprises polyethylene naphthalate and the coring level is between about 3% to about 15%. The present hybrid cabled cord may be used in tire cord for rubber reinforcement in passenger car tires, van tires, light truck tires, or motorcycle tires.

### Summary of the invention

In recent years, car manufacturers have introduced vehicles on the market that are increasingly higher-performing, also due to the matching with electric motors capable of developing very high and substantially instantaneous torques. Reference is made for example to the hybrid Ferrari 2013 ("LaFerrari" model) with an overall power of nearly 1000 CV and a total torque of nearly 1000 Nm

The Applicant has observed that the typical reinforcement belt structures no longer seem sufficient to ensure the size stability of the tyre and its integrity when subjected to the stresses that said vehicles are capable of generating.

The Applicant has also observed that an increase of the number of reinforcement layers at 0° in radially superimposed positions may not be a satisfactory solution to the problem of ensuring performances and integrity at high and very high speeds. The increase of the number of reinforcement layers involves an increase of the mass of the tyre in the radially outer zone and, given the same speed and torque transmitted by the motor to the wheel, an increase of the forces of inertia applied in said zone.

With the increase of the stresses, the increase of rigidity obtained due to a multiple reinforcement layer may on one hand not involve an effective decrease of the radial and/or tangential deformations while on the other hand it may compromise the integrity of the tyre, in particular in the crown zone.

In the crown zone of the tyre, at high rolling speeds, the radially more external layers are more greatly affected by the action of the centrifugal force (phenomenon of lifting). In such zone, a radial deformation is underlined that tends to lift the central portion of the tread, with consequent reduction of the width of the footprint area.

The deformation and tendency towards separation between the layers, in particular of the belt layers, causes a decline of the performances and can lead the tyre towards a relatively quick degradation.

In the portions of the crown zone close to the sidewalls (edges and shoulders), the axial ends of the belt structure, and in particular of the so-called zero degree belt, are less constrained than the central portions of the belt structure.

The axial ends of the belts are therefore more free to be deformed during the rolling and consequently require a greater constraint in order to oppose deformations and increases of temperature in particular at high speeds.

Such constraining effect is obtainable by a belt structure that is more rigid due to the presence of two or more zero degree belt layers associated at the axial ends of the belt structure.

The Applicant has observed that the performances of the vehicle while running and during manoeuvres completed at high speeds can be affected by the capacity of the tyre to be opposed to the centrifugal radial deformations. The Applicant has nevertheless observed that if a greater "holding" effect, obtainable by means of a belt layer with more rigid reinforcement elements arranged substantially in circumferential direction (the so-called zero degree belt), opposed the effect of lifting at high speeds, such greater rigidity involved a negative impact on the performances of the tyre. For example, the greater responsiveness, provided to the motor vehicle due to the increased rigidity of the zero degree belt, impacted the suspension system of the vehicle, triggering rolling that was to the detriment of the manoeuvrability.

The Applicant has turned its attention to the field of hybrid reinforcements and in particular to reinforcements obtained via twisting of high modulus yarns and low modulus yarns, such as hybrids formed by yarns made of polyaramid fibre and yarns made of polyamide fibre.

The Applicant has observed that a cord of reference of the sports field is the hybrid cord obtained with a polyaramid yarn (aromatic polyamide) with linear density 1670 - 1680 dtex and a nylon yarn with linear density 1400 dtex.

In order to increase the rigidity of the reinforcement elements incorporated in the zero degree belt, the Applicant tried to employ yarns made of aramid fibre with very high linear density. Such elements (for example a cord formed by a polyaramid fibre yarn with linear density greater than 3000 dtex and a nylon yarn with linear density 1400 dtex) were not deemed suitable, since they involved an increase of thickness of the rubber-covered belt layer caused by the increase of section of the yarns forming the reinforcement elements. Such thickness increase involved an increase of overall mass of the layer, which was in contrast to the desired reduction of inertia in the radially outer zones of the tyre.

The Applicant has observed that the hybrid reinforcement elements, made of Aramid - Nylon fibres formed by using aramid fibres with low linear density, were not appropriate. Even if it was possible to obtain a good elastic modulus of the cord thus obtained and a relatively thin reinforced layer incorporating a plurality of such cords within an elastomeric matrix, such cord and consequently the belt layer had insufficient tenacity since the rupture load of the cord was too low with respect to the reference cords.

In such context, and in the presence of the different needs, in contrast with each other, the Applicant posed the problem of increasing the performances of the tyre at high speeds with particular regard towards manoeuvrability.

The Applicant has found that it is possible to increase the high-speed performances of a vehicle, in particular its manoeuvrability, by equipping the vehicle with tyres comprising a belt structure which comprises a radially outer circumferential belt layer of the belt structure comprising a plurality of hybrid reinforcement cords arranged according to a substantially zero angle with respect to the equatorial plane (X-X) of the tyre, each of said hybrid reinforcement cords being formed by two aromatic polyamide fibre yarns (aramid fibre) and one polyester and/or aliphatic polyamide fibre yarn, wherein each of the aromatic polyamide fibre yarns has a linear density less than or equal to about 1500 dTex and an initial modulus equal to or greater than about 6000 cN/tex, measured in accordance with the BISFA standard - Testing methods for para-aramid fibre yarns, 2002 edition.

According to the present invention, there is the provision of a tyre for wheels of a vehicle according to claim 1 and of a method for increasing the high speed performance of a vehicle according to claim 11.

The present invention, in at least one of the aforesaid aspects, can have one or more of the preferred characteristics described hereinbelow.

Preferably said two aromatic polyamide fibre yarns (aramid fibre) and said polyester and/or aliphatic polyamide fibre yarn are assembled by means of a twisting process.

Preferably the radially outer circumferential belt layer of the belt structure is assembled by winding a continuous elongated element comprising at least one said continuous hybrid cord along a plurality of spirals.

Preferably the continuous elongated element is wound in a manner so as to have the spirals axially adjacent.

Preferably the continuous elongated element is wound in a manner so as to have the spirals at least partially axially superimposed.

Preferably said continuous elongated element comprises a plurality of parallel, side-by-side continuous hybrid cords.

Preferably said continuous elongated element comprises a number of parallel, side-by-side continuous hybrid cords equal to or greater than about 40 cords/dm, preferably equal to or less than 120 cords/dm of rubber-covered fabric.

Preferably the radially outer circumferential belt layer of the belt structure is substantially present at at least one crown portion arranged in proximity to the axial ends of the tread of the tyre.

Preferably the radially outer circumferential belt layer of the belt structure is substantially present at at least one crown portion that is centrally arranged with respect to the equatorial plane of the tyre, preferably said crown portion is equal to or greater than at least 50% of the axial extension of the tread of the tyre.

Preferably said two aromatic polyamide fibre yarns (aramid fibre) and said polyester and/or aliphatic polyamide fibre yarn are assembled by means of a twisting process.

Preferably each of said aromatic polyamide fibre yarns has a linear density less than or equal to about 1400 dTex

Preferably each of said aromatic polyamide fibre yarns has a linear density equal to or greater than about 600 dTex.

Preferably each of said aromatic polyamide fibre yarns has a linear density equal to or greater than about 800 dTex.

Preferably each of said aromatic polyamide fibre yarns has a linear density equal to or greater than about 1100 dTex.

Preferably each of said aromatic polyamide fibre yarns has an initial modulus equal to or greater than about 6200 cN/tex measured in accordance with the BISFA standard - Testing methods for para-aramid fibre yarns, 2002 edition.

Preferably said polyester and/or aliphatic polyamide fibre yarn has linear density equal to or less than about 1500 dtex

Preferably said polyester or aliphatic polyamide fibre yarn has linear density equal to or less than about 1400 dtex

Preferably said polyester or aliphatic polyamide fibre yarn has linear density equal to or greater than about 800 dTex

The linear density or count of the yarns was expressed in dTex, which represent the mass expressed in grams of a thread or thread-like reinforcement element of 10000 m length.

The hybrid textile cords are identified with the twist (expressed in a number of twists per meter) imparted to each of the single yarns and with the twist imparted to the cord formed by the abovementioned yarns.

Preferably, the twists imparted to each of the aromatic polyamide fibre yarns are greater than 150 twists/m, still more preferably less than 400 twists/m.

Preferably, the twists imparted to each of the aliphatic polyamide or polyester fibre yarns are greater than 40 twists/m, still more preferably less than 300 twists/m.

The Applicant has observed that through the twists imparted to the single yarns and/or assembled garments, it is possible to obtain hybrid cords provided with different properties, such as improved adaptability to the shaping process and to the stresses during tyre operation.

By regulating the number of twists, it is possible to obtain a desired expansion of the structural element of the tyre, in particular of the belt structure of the tyre, during the tyre manufacturing process, along with a high holding effect, in particular when the tyre runs at high speeds.

Preferably the radially outer circumferential belt layer of the belt structure is substantially present at the axial ends of the crown portion of the tyre.

Preferably the radially outer circumferential belt layer of the belt structure is substantially present at at least one crown portion that is centrally arranged with respect to the equatorial plane of the tyre, preferably said crown portion is equal to or greater than at least 50% of the axial extension of the crown portion of the tyre.

Preferably said radially outer circumferential belt layer of the belt structure is axially extended at at least 70% of the axial extension of the tyre crown portion.

Preferably said radially outer circumferential belt layer of the belt structure is axially extended at at least 80% of the axial extension of the tyre crown portion.

Preferably the radially outer circumferential belt layer of the belt structure has more than one layer, since at least in proximity of each of the axial ends of the belt structure, a further layer radially superimposed on said layer is obtained.

Preferably a further belt layer radially superimposed on said radially outer belt layer of the belt structure arranged in proximity of each axial end of the belt structure is axially extended at each axial end of the crown portion for a value equal to or less than 25% of the axial extension of the crown portion.

Preferably said further belt layer radially superimposed on said radially outer belt layer of the belt structure is axially extended in proximity of each axial end of the belt structure for a value equal to or less than 15% of the axial extension of the crown portion.

Preferably said further belt layer radially superimposed on said radially outer belt layer of the belt structure is axially extended in proximity of each axial end of the belt structure for a value equal to or less than 10% of the axial extension of the crown portion.

By "crown portion" of a tyre it is intended the portion of the tyre structure corresponding with the region where the tread band is present. By way of example, the length of the axial extension of the crown portion can be identified by the distance that lies between two segments perpendicular to the tread band departing from edges of the tread band itself.

For the purposes of the present invention, with regard to the measurement of the linear density and the initial traction modulus, reference is made to flat yarns, without twists applied in test phase, according to the tests regulated by BISFA (Bureau International pour la Standardisation des Fibres Artificielles).

In particular:
- for aramid fibres (AR): BISFA - Testing methods for para-amid fibre yarns, 2002 edition
- Determination of the linear density - Chapter 6
- Determination of the tensile properties - Chapter 7 - Test procedure - Paragraph 7.5 - with procedure with initial pretensioning.
Tractions carried out with Zwick - Roell Z010 dynamometer.

### - for polyester (PET)

BISFA - Testing methods for polyester yarns, 2004 edition
Determination of the tensile properties - Chapter 7 - Procedure A
Preparation of laboratory samples: Preparation of slack samples - paragraph 7.4.1.1 => preparation of samples on collapsible spool
Preparation of laboratory samples and execution of the test: Manual test - paragraph 7.5.2.1 => c)
Start of procedure => e) pretension at the procedure start
Tractions carried out with Zwick - Roell Z010 dynamometer

### - for nylon (NY)

BISFA - Testing methods for polyamide yarns, 2004 edition
Determination of the tensile properties - Chapter 7 - Procedure A
Preparation of laboratory samples: Preparation of slack samples - paragraph 7.4.1.1 => preparation of samples on collapsible spool
Preparation of laboratory samples and execution of the test: Manual test - paragraph 7.5.2.1 => c)
Start of procedure => e) pretension at the procedure start
Tractions carried out with Zwick - Roell Z010 dynamometer

### Brief description of the drawings

Further characteristics and advantages will be clear from the detailed description of a preferred but not exclusive embodiment of a method for increasing the performances of a tyre for vehicle wheels and of a tyre for vehicle wheels in accordance with the present invention.

Such description will be set forth hereinbelow with reference to the set of drawings, provided merely as a non-limiting example, in which:
- figure 1 schematically shows, in radial half-section, a tyre for vehicle wheels according to the invention;
- figures 2a and 2b show in partial section the details of different embodiments of circumferential belt layers comprising hybrid cords.
- figure 3 shows a load/elongation diagram that compares between yarns made of Kevlar® aramid fibre.

### Detailed description of the preferred embodiments

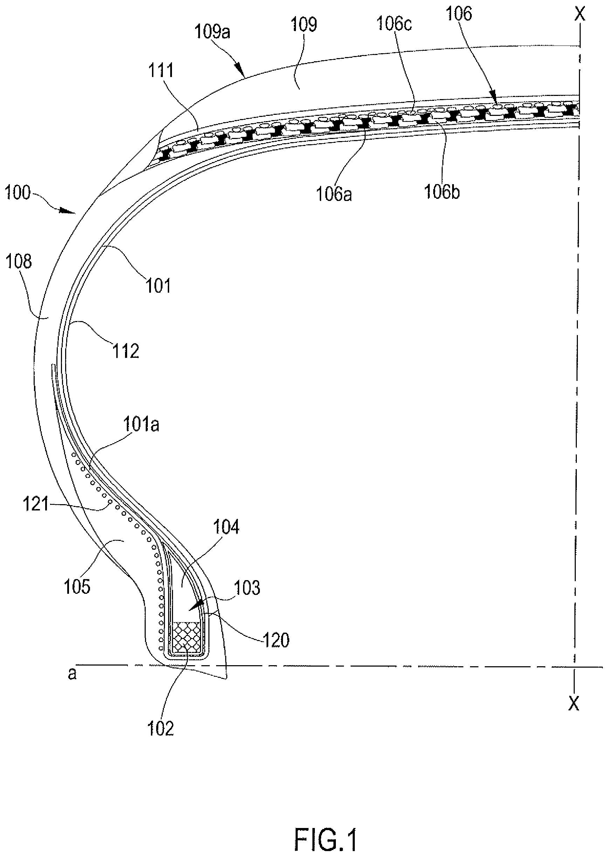

The description of a tyre with reference to figure 1 is set forth hereinbelow, provided only as a non-limiting example.

Figure 1 illustrates a tyre for vehicle wheels in radial section.

In figure 1, "a" indicates an axial direction and "X" indicates a radial direction, in particular X-X indicates the trace of the equatorial plane.

The tyre 100 for four-wheel vehicles comprises at least one carcass structure, comprising at least one carcass layer 101 having respectively opposite end edges engaged with respective annular anchoring structures 102, termed bead cores, possibly associated with a bead filler 104. The zone of the tyre comprising the bead core 102 and the filler 104 forms a bead structure 103 intended to anchor the tyre on a corresponding mounting rim, not illustrated.

The carcass structure is usually of radial type, i.e. the reinforcement elements of the at least one carcass layer 101 are situated on planes comprising the rotation axis of the tyre and substantially perpendicular to the equatorial plane of the tyre. Said reinforcement elements are generally constituted by textile cords, e.g. rayon, nylon, polyester (e.g. polyethylene naphthalate (PEN)). Each bead structure is associated with the carcass structure by means of folding back the opposite lateral edges of the at least one carcass layer 101 around the annular anchoring structure 102 in a manner so as to form the so-called carcass flaps 101a as illustrated in figure 1.

In one embodiment, the coupling between the carcass structure and the bead structure can be provided by means of a second carcass layer (not represented in figure 1), applied in an axially outer position with respect to the first carcass layer. An anti-abrasive strip 105 obtained with elastomeric material is arranged in an external position of each bead structure 103.

The carcass structure is associated with a belt structure 106 comprising one or more belt layers 106a, 106b situated in radial superimposition with respect to each other and with respect to the carcass layer, having typically textile and/or metallic reinforcement cords incorporated in an elastomeric composition layer.

Such reinforcement cords can have crossed orientation with respect to a circumferential extension direction of the tyre 100. By "circumferential" direction, it is intended a direction generically directed along the rotation direction of the tyre. In a radially more external position with respect to the belt layers 106a, 106b, at least one circumferential reinforcement layer 106c is applied, commonly known as "0° belt", comprising at least one circumferential belt layer being axially extended substantially at at least one crown portion.

Such circumferential reinforcement layer can be present in proximity to the axial ends of the crown of the tyre and/or it can be centrally arranged with respect to the equatorial plane of the tyre for an axial extension equal to or greater than about at least 50% of the axial extension of the crown of the tyre. The reinforcement layer (circumferential belt) can comprise a plurality of hybrid cords arranged substantially parallel or at least one elongated element comprising at least one elastomeric material incorporating at least one hybrid reinforcement cord arranged to a form a plurality of windings arranged according to a substantially zero angle with respect to the equatorial plane (X-X) of the tyre. The hybrid reinforcement cord is formed by two aromatic polyamide fibre yarns (aramid fibre) and one polyester and/or aliphatic polyamide fibre yarn assembled by means of a twisting process; wherein each of the aromatic polyamide fibre yarns has a linear density comprised between 1250 dTex and 1380 dTex and an initial modulus equal to or greater than 6000 cN/tex and equal to or less than 8200 cN/Tex measured in accordance with the BISFA standard -

Testing methods for para-aramid fibre yarns, 2002 edition.

Polyaramid fibre yarns can for example be obtained from fibres of Kevlar® Type 956C (Kevlar® 129) and/or of Kevlar® Type 965 (Kevlar® 49), both made by DuPont®, and from fibres of Twaron® 2200 by Teijin Aramid.

The aliphatic polyamide fibre yarns can be selected for example from the group comprising: Nylon 6, Nylon 66, Nylon 46.

The polyester yarns can for example be selected from among PET and PEN fibre yarns.

In radially outer position with respect to the belt structure 106, a tread band 109 made of elastomeric compound is applied, like other semifinished products constituting the tyre 100.

Respective sidewalls 108 made of elastomeric compound are also applied in axially outer position on the lateral surfaces of the carcass structure, each being extended from one of the lateral edges of the tread 109 up to the respective bead structure 103.

In radially outer position, the tread band 109 has a rolling surface 109a intended to come into contact with the ground. Circumferential grooves, which are connected by transverse notches (not shown in figure 1) in a manner so as to define a plurality of blocks of various shapes and sizes distributed on the rolling surface 109a, are generally obtained in this surface 109a, which for the sake of simplicity is represented smooth in figure 1.

An underlayer 111 can be arranged between the belt structure 106 and the tread band 109.

In the case of tyres without air chamber, a rubber layer 112, generally known as "liner", which provides the necessary impermeability to the tyre inflation air, can also be provided in a radially inner position with respect to the carcass layer 101. The rigidity of the tyre sidewall 108 can be improved by providing the bead structure 103 with a reinforcement layer 120 generally known as "flipper" or additional strip-like insert.

The flipper 120 is a reinforcement layer which is wound around the respective bead core 102 and the bead filler 104 in a manner so as to at least partially surround them, said reinforcement layer being arranged between the at least one carcass layer 101 and the bead structure 103. Usually, the flipper is in contact with said at least one carcass layer 101 and said bead structure 103.

The flipper 120 typically comprises a plurality of textile cords incorporated in a vulcanised elastomeric composition layer obtained by vulcanising a vulcanisable elastomeric composition. Such cords can be made of textile materials (e.g. aramid or rayon) or hybrid textiles, e.g. aramid-nylon as previously described.

The tyre bead structure 103 can comprise a further protection layer which is generally known with the term "chafer" 121 or protection strip and which has the function of increasing rigidity and integrity of the bead structure 103.

The chafer 121 usually comprises a plurality of cords incorporated in an elastomeric composition layer obtained by vulcanising a vulcanisable elastomeric composition as previously described. Such cords can be made of textile materials (e.g. aramid or rayon) or hybrid textiles, e.g. aramid-nylon as previously described or made of metal materials (e.g. steel cords).

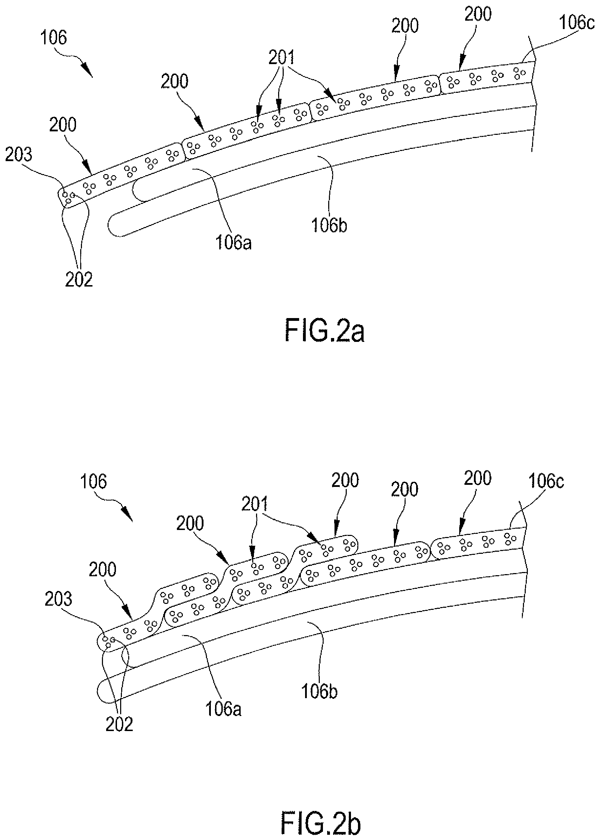

With reference to figures 2a and 2b, the details of two belt structures are respectively illustrated in partial section. In both figures, two radially superimposed crossed belt layers 106a and 106b are illustrated.

In figure 2a, a circumferential belt layer 106c is superimposed on the crossed belts, such layer formed by the deposition of elongated reinforcement elements 200 arranged adjacent (deposition S) comprising strips of elastomeric material within which hybrid cords 201 are incorporated; such cords 201 are formed by yarns made of aramid fibre 202 and yarns made of polyester and/or aliphatic polyamide fibre 203 as described above.

In figure 2b, the elongated reinforcement elements are obtained as in the preceding case, comprising strips of elastomeric material within which hybrid cords 201 are incorporated, such cords being formed by aramid fibre yarns 202 and polyester and/or aliphatic polyamide fibre yarns 203 as described above, but they are deposited in partially superimposed manner, in the illustrated case starting from the two ends of the crown zone (only one illustrated in the figure) and in side-by-side mode for a central portion of the crown.

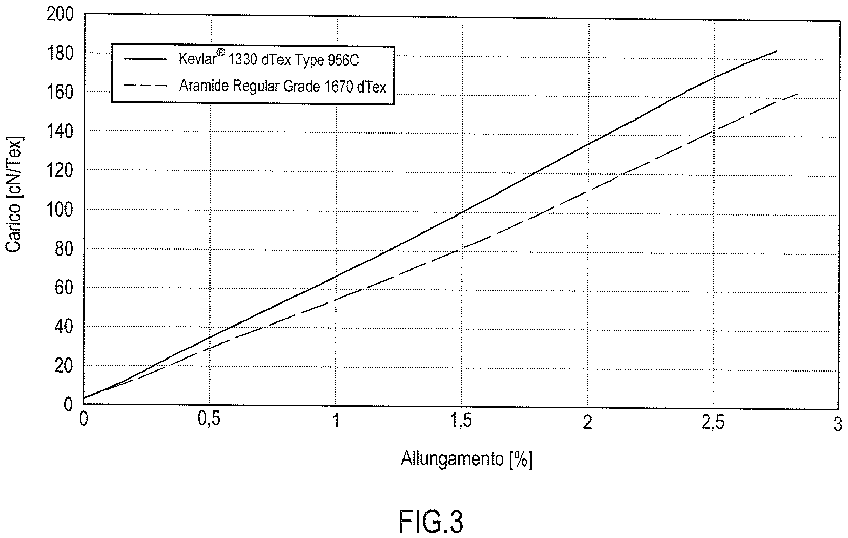

Advantageously, according to such modes of deposition of the circumferential belt layer, a considerable weight reduction of the tyre is obtained (about 600g - 700g for a tyre 355/25 R21) with respect to a reference tyre comprising a zero degree belt reinforced with typical reference hybrid cords (AR-NY 1670/1400) deposited on two radially superimposed layers in order to ensure a suitable holding effect. Figure 3 shows a load / elongation diagram of comparison between an aramid yarn intended for a tyre according to the invention and a reference aramid yarn. As can be observed, the aramid yarn in Kevlar® Type 956 C (Kevlar®129) used for the belt layer for the tyre according to the invention with linear density 1330 dtex has, given the same elongation, a load of about 20% more with respect to the reference aramid yarn with greater count (Aramid Regular Grade 1670 dtex).

The hybrid yarns made of aramid and nylon described above can be incorporated in a cross-linkable elastomeric composition according to known techniques. Usually, said elastomeric composition comprises elastomeric polymers, as well as other additives such as, for example, fillers (e.g. carbon black, silica), vulcanising agents (e.g. sulfur), activating agents, accelerants, plasticisers used in the tyre industry. Examples of elastomeric polymers that can be advantageously used are the following: natural rubber (NR), epoxidised natural rubber (ENR); butadiene homopolymers and copolymers, isoprene or 2-chlorobutadiene such as, for example, polybutadiene (BR), polyisoprene (IR), styrene-butadiene (SBR), nitrile-butadiene (NBR), polychloroprene (CR); butyl rubbers (IIR), halogenated butyl rubber (XIIR); ethylene/propylene copolymers (EPM); non-conjugated ethylene/propylene/diene terpolymers (such as, for example, norbornene, cyclooctadiene or dicyclopentadiene (EPDM); or mixtures thereof. A man skilled in the art will be able to determine which elastomeric polymers, as well as which additives, to use as a function of the characteristics of the final manufactured product that one wishes to obtain.

Optionally, in order to improve the adhesion of said hybrid yarn to the elastomeric composition, said hybrid yarn can be surface treated by immersing it in a solution containing a mixture of thermosetting resin, e.g. resorcinol-formaldehyde and rubber latex (this mixture commonly indicated with the expression "resorcinol-formaldehyde latex RFL"), and subsequently proceeding with the drying. The latex used can be selected, for example, from among the following: vinylpyridine/styrene-butadiene (VP/SBR), styrene-butadiene (SBR), natural rubber latex (NR), carboxylated hydrogenated acrylonitrile-butadiene (X-HNBR), hydrogenated acrylonitrile (HNBR), acrylonitrile (NBR), ethylene-propylene-diene monomer (EPDM), chlorosulfonated polyethylene (CSM) or a mixture thereof. Preferably the adhesive treatment of the yarn to the elastomeric material can be carried out by means of a resin not containing resorcinol or derivatives thereof. Preferably, the tyre according to the present invention is adapted for "HP" (high performance) tyres or "UHP" (ultra high performance) tyres, i.e. tyres capable of sustaining a maximum speed of at least 210 km/h, preferably over 240 km/h, still more preferably over 270 km/h. Examples of said tyres are those belonging to the classes "H", "V", "W", "Y", "Z", or "ZR" according to the ETRTO standard.

### Drive performances

Tyres for motor vehicles were prepared according to figure 1, comprising
a carcass structure;
a belt structure applied in radially outer position with respect to said carcass structure, said belt structure comprising:
two belt layers including a plurality of reinforcement elements arranged parallel to each other in each layer and oriented tilted with respect to the circumferential direction;
a zero degree belt layer that is radially outer with respect to said at least two belt layers, including a hybrid cord arranged to form a plurality of windings arranged according to a substantially zero angle with respect to a direction parallel to the equatorial plane (X-X) of the tyre;
a tread band applied in radially outer position with respect to said belt structure.

In the tyres obtained according to the invention, the hybrid reinforcement cord was formed by two aromatic polyamide fibre yarns (aramid fibre), Kevlar® Type 956C by DuPont and one aliphatic polyamide fibre yarn made of Nylon 66 T 728 by Kordsa, assembled by means of a twisting process; wherein each of the aromatic polyamide fibre yarns had a linear density equal to about 1330 dTex and an initial modulus of 6600 cN/tex measured according to the abovementioned BISFA norms.

The imparted twists were 250 TPM (twists per metre) for the yarns of Kevlar® Type 956C and 90 TPM for the yarn of Nylon 66 T 728 and the twisting of the three yarns was carried out with 250 TPM.

The cords intended for the belt of the reference tyre R were obtained with a yarn of Aramid regular grade with 1670 dtex of linear density and a yarn of Nylon 66 T728.

The imparted twists were 260 TPM for the aramid, 70 TPM for the Nylon and 260 TPM of twisting for the two yarns.

The radially outer circumferential belt layer was obtained by winding a continuous elongated element comprising hybrid cords incorporated in an elastomeric material:
- in the sample A1, the winding spirals of the continuous elongated element were laid axially side-by-side (deposition scheme S);
- in the sample A2, the winding spirals of the continuous elongated element were laid axially side-by-side with a half-width superimposition of continuous elongated element for 25 mm from each axial end of the crown (deposition scheme S/2 - S - S/2).

The reference tyre R was obtained like the tyres according to the invention except for the radially outer layer of the belt structure, which was obtained by winding a continuous elongated element comprising hybrid cords made of aramid fibre yarn and aliphatic polyamide fibre yarn.

The winding spirals of the continuous elongated element were axially laid superimposed for half of their length (scheme S/2). Hence, there was a double circumferential layer for the entire extension of the tyre crown.

The hybrid cords were formed by an aromatic polyamide fibre (aramid fibre) yarn and an aliphatic polyamide fibre yarn assembled by means of a twisting process; wherein each aromatic polyamide fibre yarn had a linear density equal to about 1670 dTex and an initial modulus of 5400 cN/tex measured according to the abovementioned BISFA standards.

In all the samples (R, A1, A2), the aliphatic polyamide yarn was Nylon 66 T 728 by Kordsa, having linear density of 1400 dtex.

The tyres having size 355/25 R21 were mounted on the rear of a Lamborghini Aventador Version 6.5 V12 LP 700-4 - 6498 cc powered, maximum power (revolutions) over 700 cv at 8250 rev, maximum torque (revolutions) 690 Nm at 5500 rev and tested on a racetrack. For the purpose of evaluating the behaviour of the tyre, the tester simulated several characteristic manoeuvres. Then, the tester evaluated the behaviour of the tyre in different drive conditions and assigned a score as a function of the deviation of the performance of the tyres according to the invention (samples A1, A2) with respect to reference tyres (sample R).

The tester evaluated different behaviours, corresponding to different drive conditions, in particular:
1. Drive performances in normal conditions ("Soft Handling"): the steering response of the car in running on a straight run in low/average speed conditions.
2. Response speed: the car transient response following a steering stress in average/high speed conditions. Considers the capacity of the set of tyres to react to a steering stress in a more or less quick manner.
3. Drive performances in extreme conditions ("Hard Handling"): the set of characteristics of the car/tyre assembly in emergency manoeuvre conditions or with a very sporty or extreme driver, which involve the attainment of the adherence limit.

Table 1 summarises the tester score sheet for controlling the tyres in the three above-considered areas. The results of these tests are expressed by comparison with respect to the set of reference tyres taken as base. The values reproduced in the following table represent an average value from among those obtained in multiple test sessions (6 tests).

In the present case, the indication "=" indicates the base level of the set of tyres taken as reference, the indication "+" indicates an improved performance with respect to the reference set, the indication "++" indicates a very positive performance with respect to the reference set.

On the other hand, a decreased performance with respect to the reference set is indicated with "-", a very negative performance with respect to the reference set is indicated with " - -".

**Table 1**

| T. air = 33°C | R ref | A1 inv | | A2 inv |
|---|---|---|---|---|
| T. track = 45°C | | | | |
| 1. SOFT HANDLING | | | | |
| | = | = | | = |

| 2. RESPONSE SPEED | | | | |
|---|---|---|---|---|
| | = | + | | ++ |

| 3. HARD HANDLING | | | | |
|---|---|---|---|---|
| | = | + | | ++ |

The results reported in Table 1 clearly demonstrate that the tyres according to the present invention had a behaviour generally equal to or better than that of the comparison tyre (R) which has for some time been appreciated for its optimal level performances.

In particular the following were observed:
- an improved behaviour with respect to the reference in the duration of the transient response, indicating a rapid recovery of position after a sudden steering manoeuvre obtained due to an immediate response of the tyres; an improved behaviour in release on bends, indicating greater safety for the driver.

### High Speed Integrity Test

A high speed integrity test was conducted.

The test was made with ultra high performance (UHP) tyres in order to determine the fatigue strength limit of a tyre with the increase of the rotation speed, up to the attainment of the rupture limit.

The tests were conducted by rolling the tyres subjected to load on a drum.

The speed of the tyres was brought from 0 to a predetermined speed close to the maximum speed indicated for the tyre and maintained for a certain time period. Subsequently, the speed was increased by constant values at constant time intervals until there was clear failure.

The following table 2 reports, in percentage value, the ratios of maximum speed and duration attained by tyres according to the invention (A1 A2) with respect to a reference tyre (R).

**Table 2**

| Sample | Maximum speed | Duration |
|---|---|---|
| | % | % |
| R | 100 | 100 |
| A1 | 103 | 106 |
| A2 | 103 | 108 |

The tyres A1, A2, including a zero degree belt layer obtained in the above-described manner, showed greater strength before failure both in terms of maximum speed and in terms of duration.

The tyres according to the invention (A1 and A2) while manifesting performances equal to or greater than the reference tyre (R) also in terms of maximum speed reached without failures, weighed several hundred grams less (respectively A1-700 g less than R and A2-600 grams less than R considering that the weight of this tyre type is about 15 kg) due to the reduced presence of zero degree belt layer (respectively layer or layer with double layer for 25 mm at the ends of the crown for the tyres A1 and A2 according to the invention and double layer for the reference tyre R).

## Claims

1. Tyre for wheels of vehicles, comprising a belt structure (106) comprising a radially outer circumferential belt layer (106c) of the belt structure (106) comprising a plurality of hybrid reinforcement cords (201) arranged according to a substantially zero angle with respect to the equatorial plane (X-X) of the tyre (100), each of said hybrid reinforcement cords (201) being formed by two aromatic polyamide fibre yarns (202) and by a polyester and/or aliphatic polyamide fibre yarn (203); **characterised in that** each of the aromatic polyamide fibre yarns (202) has a linear density comprised between 1250 dTex and 1380 dTex and an initial modulus equal to or greater than 6000 cN/Tex and equal to or less than 8200 cN/Tex measured in accordance with the BISFA standard - Testing methods for para-aramid fibre yarns, 2002 edition.

2. Tyre for wheels of vehicles as claimed in any one of the preceding claims, wherein each of said aromatic polyamide fibre yarns (202) has an initial modulus equal to or greater than 6200 cN/Tex.

3. Tyre for wheels of vehicles as claimed in any one of the preceding claims, wherein said polyester and/or aliphatic polyamide fibre yarn (203) has linear density less than or equal to 1500 dTex measured in accordance with the BISFA standard - Testing methods for polyamide yarns, 2004 edition or the BISFA standard - Testing methods for polyester yarns, 2004 edition.

4. Tyre for wheels of vehicles as claimed in any one of the preceding claims, wherein said polyester or aliphatic polyamide fibre yarn (203) has linear density equal to or greater than 800 dTex.

5. Tyre for wheels of vehicles as claimed in any one of the preceding claims, wherein said two aromatic polyamide fibre yarns (202) and said polyester and/or aliphatic polyamide fibre yarn (203) are assembled by means of a twisting process.

6. Tyre for wheels of vehicles as claimed in any one of the preceding claims, wherein the twists imparted to each of the aromatic polyamide fibre yarns (202) are greater than 150 twists/m and less than 400 twists/m.

7. Tyre for wheels of vehicles as claimed in any one of the preceding claims, wherein the twists imparted to each of the polyester or aliphatic polyamide fibre yarns (203) are greater than 40 twists/m and less than 300 twists/m.

8. Tyre for wheels of vehicles as claimed in any one of the preceding claims, wherein the radially outer circumferential belt layer (106c) of the belt structure (106) is present substantially at at least one crown portion arranged in proximity to the axial ends of the crown of the tyre (100).

9. Tyre for wheels of vehicles as claimed in any one of the claims from 1 to 7, wherein the radially outer circumferential belt layer (106c) of the belt structure (106) is substantially present at at least one crown portion that is centrally arranged with respect to the equatorial plane (X-X) of the tyre (100), preferably said crown portion is equal to or greater than at least 50% of the axial extension of the crown of the tyre (100).

10. Tyre for wheels of vehicles as claimed in claim 8, wherein a further belt layer radially superimposed on said radially outer belt layer (106c) of the belt structure (106) arranged in proximity to each axial end of the belt structure (106) is axially extended at each axial end of the crown for a value equal to or less than 25% of the axial extension of the crown.

11. Method for increasing the high-speed performances of a vehicle, comprising:
- obtaining tyres (100) comprising a belt structure (106) comprising a radially outer circumferential belt layer (106c) of the belt structure (106) comprising a plurality of hybrid reinforcement cords (201) arranged according to a substantially zero angle with respect to the equatorial plane (X-X) of the tyre (100), each of said hybrid reinforcement cords (201) being formed by two aromatic polyamide fibre yarns (202) and one polyester and/or aliphatic polyamide fibre yarn (203), **characterised in that** each of the aromatic polyamide fibre yarns (202) has a linear density comprised between 1250 dTex and 1380 dTex and an initial modulus equal to or greater than 6000 cN/Tex and equal to or less than 8200 cN/Tex measured according to the BISFA standard - Testing methods for para-aramid fibre yarns, 2002 edition,
- equipping a vehicle with said tyres (100).

12. Method as claimed in claim 11, wherein said two aromatic polyamide fibre yarns (202) and said polyester and/or aliphatic polyamide fibre yarn (203) are assembled by means of a twisting process.

13. Method as claimed in claim 11 or 12, wherein the radially outer circumferential belt layer (106c) of the belt structure (106) is assembled by winding a continuous elongated element (200) comprising at least one said continuous hybrid cord (201) along a plurality of spirals.

14. Method as claimed in claim 13, wherein the continuous elongated element (200) is wound in a manner so as to have the spirals axially adjacent or partly axially superimposed.

15. Method as claimed in claim 13 or 14, wherein said continuous elongated element (200) comprises a number of parallel, side-by-side continuous hybrid cords (201) equal to or greater than 40 cords/dm, preferably equal to or less than 120 cords/dm of rubber-covered fabric.

## Patentansprüche

1. Reifen für Fahrzeugräder, umfassend eine Gürtelstruktur (106) mit einer radial äußeren, umlaufenden Gürtellage (106c) der Gürtelstruktur (106), umfassend eine Vielzahl von Hybridverstärkungskorden (201), die mit einem Winkel von im Wesentlichen null in Bezug auf die Äquatorialebene (X-X) des Reifens (100) angeordnet sind, wobei die Hybridverstärkungskorde (201) durch zwei Fasergarne (202) aus aromatischem Polyamid und einem Fasergarn (203) aus Polyester und/oder aliphatischem Polyamid gebildet werden; **dadurch gekennzeichnet, dass** jedes der Fasergarne (202) aus aromatischem Polyamid (202) eine lineare Dichte zwischen etwa 1250 dTex und 1380 dTex und einen anfänglichen Modul gleich oder größer als etwa 6000 cN/Tex und gleich oder kleiner als etwa 8200 cN/Tex, gemessen nach der BISFA-Norm - *Testing methods for para-aramid fibre yarns*, Ausgabe 2002, aufweist.

2. Reifen für Fahrzeugräder nach einem der vorhergehenden Ansprüche, wobei jedes der Fasergarne (202) aus aromatischem Polyamid (202) einen anfänglichen Modul gleich oder größer als etwa 6200 cN/Tex aufweist.

3. Reifen für Fahrzeugräder nach einem der vorhergehenden Ansprüche, wobei das Fasergarn (203) aus Polyester und/oder aliphatischem Polyamid eine lineare Dichte von weniger als oder gleich etwa 1500 dTex, gemessen nach der BISFA-Norm - *Testing methods for polyamide yarns*, Ausgabe 2004, oder der BISFA-Norm - *Testing methods for polyester yarns*, Ausgabe 2004, aufweist.

4. Reifen für Fahrzeugräder nach einem der vorhergehenden Ansprüche, wobei das Fasergarn (203) aus Polyester oder aliphatischem Polyamid eine lineare Dichte gleich oder größer als etwa 800 dTex aufweist.

5. Reifen für Fahrzeugräder nach einem der vorhergehenden Ansprüche, wobei die zwei Fasergarne (202) aus aromatischem Polyamid und das Fasergarn (203) aus Polyester und/oder aliphatischem Polyamid durch ein Verdrillverfahren assembliert werden.

6. Reifen für Fahrzeugräder nach einem der vorhergehenden Ansprüche, wobei die Verdrillungen, die jedem der Fasergarne (202) aus aromatischem Polyamid verliehen werden, mehr als 150 Verdrillungen/m und weniger als 400 Verdrillungen/m betragen.

7. Reifen für Fahrzeugräder nach einem der vorhergehenden Ansprüche, wobei die Verdrillungen, die jedem der Fasergarne (203) aus Polyester oder aliphatischem Polyamid verliehen werden, mehr als 40 Verdrillungen/m und weniger als 300 Verdrillungen/m betragen.

8. Reifen für Fahrzeugräder nach einem der vorhergehenden Ansprüche, wobei die radial äußere, umlaufende Gürtellage (106c) der Gürtelstruktur (106) im Wesentlichen an zumindest einem Zenithabschnitt vorliegt, der in unmittelbarer Nähe zu den axialen Enden des Zeniths des Reifens (100) angeordnet ist.

9. Reifen für Fahrzeugräder nach einem der Ansprüche 1 bis 7, wobei die radial äußere, umlaufende Gürtellage (106c) der Gürtelstruktur (106) im Wesentlichen an zumindest einem Zenithabschnitt vorliegt, der zentral in Bezug auf die Äquatorialebene (X-X) des Reifens (100) angeordnet ist, wobei der Zenithabschnitt vorzugsweise gleich oder größer als zumindest 50 % der axialen Erstreckung des Zeniths des Reifens (100) ist.

10. Reifen für Fahrzeugräder nach Anspruch 8, wobei eine weitere Gürtellage, die radial der radial äußeren Gürtellage (106c) der Gürtelstruktur (106), die in unmittelbarer Nähe jedes der axialen Enden der Gürtelstruktur (106) angeordnet ist, überlagert ist, sich axial über jedes axiale Ende des Zeniths für einen Wert gleich oder kleiner 25 % der axialen Erstreckung des Zeniths erstreckt.

11. Verfahren zur Verbesserung der Hochgeschwindigkeitsleistung eines Fahrzeugs, umfassend: Erhalten von Reifen (100) für Fahrzeugräder, umfassend eine Gürtelstruktur (106) mit einer radial äußeren, umlaufenden Gürtellage (106c) der Gürtelstruktur (106), umfassend eine Vielzahl von Hybridverstärkungskorden (201), die mit einem Winkel von im Wesentlichen null in Bezug auf die Äquatorialebene (X-X) des Reifens (100) angeordnet sind, wobei die Hybridverstärkungskorde (201) durch zwei Fasergarne (202) aus aromatischem Polyamid und einem Fasergarn (203) aus Polyester und/oder aliphatischem Polyamid gebildet werden, **dadurch gekennzeichnet, dass** jedes der Fasergarne (202) aus aromatischem Polyamid eine lineare Dichte zwischen etwa 1250 dTex und 1380 dTex und einen anfänglichen Modul gleich oder größer als etwa 6000 cN/Tex und gleich oder kleiner als etwa 8200 cN/Tex, gemessen nach der BISFA-Norm - *Testing methods for para-aramid fibre yarns*, Ausgabe 2002, aufweist, und Ausstatten eines Fahrzeugs mit den Reifen (100).

12. Verfahren nach Anspruch 11, wobei die zwei Fasergarne (202) aus aromatischem Polyamid und das Fasergarn (203) aus Polyester und/oder aliphatischem Polyamid durch ein Verdrillverfahren assembliert werden.

13. Verfahren nach Anspruch 11 oder 12, wobei die radial äußere, umlaufende Gürtellage (106c) der Gürtelstruktur (106) assembliert wird, indem ein durchgehendes längliches Element (200) umfassend zumindest einen durchgehenden Hybridkord (201) entlang einer Vielzahl von Spiralwindungen gewickelt wird.

14. Verfahren nach Anspruch 13, wobei das durchgehende längliche Element (200) auf eine Weise gewickelt wird, dass die Spiralwindungen axial benachbart oder teilweise axial überlagert sind.

15. Verfahren nach Anspruch 13 oder 14, wobei das durchgehende längliche Element (200) eine Anzahl paralleler, Seite an Seite durchgehender Hybridkorde (201) umfasst, die in der Anzahl gleich oder mehr als etwa 40 Korde/dm, vorzugsweise gleich oder weniger als 120 Korde/dm eines gummibeschichteten Gewebes aufweisen.

## Revendications

1. Pneu pour roues de véhicules, comprenant une structure de ceinture (106) comprenant une couche de ceinture circonférentielle radialement extérieure (106c) de la structure de ceinture (106) comprenant une pluralité de câblés de renfort hybrides (201) agencés selon un angle essentiellement nul par rapport au plan équatorial (X-X) du pneu (100), chacun desdits câblés de renfort hybrides (201) étant formé de deux fils de fibres de polyamide aromatique (202) et d'un fil de fibres de polyester et/ou de polyamide aliphatique (203) ; **caractérisé en ce que** chacun des fils de fibres de polyamide aromatique (202) a une densité linéaire comprise entre 1250 dTex et 1380 dTex et un module initial supérieur ou égal à 6000 cN/tex et inférieur ou égal à 8200 cN/tex mesurés conformément à la norme BISFA - Des procédés de test pour des fils de fibres de para-aramide, édition 2002.

2. Pneu pour roues de véhicules tel que revendiqué dans l'une quelconque des revendications précédentes, dans lequel chacun desdits fils de fibres de polyamide aromatique (202) a un module initial supérieur ou égal à 6200 cN/Tex.

3. Pneu pour roues de véhicules tel que revendiqué dans l'une quelconque des revendications précédentes, dans lequel ledit fil de fibres de polyester et/ou de polyamide aliphatique (203) a une densité linéaire inférieure ou égale à 1500 dTex mesurée conformément à la norme BISFA - Des procédés de test pour des fils de polyamide, édition 2004 ou la norme BISFA - Des procédés de test pour des fils de polyester, édition 2004.

4. Pneu pour roues de véhicules tel que revendiqué dans l'une quelconque des revendications précédentes, dans lequel ledit fil de fibres de polyester ou de polyamide aliphatique (203) a une densité linéaire supérieure ou égale à 800 dTex.

5. Pneu pour roues de véhicules tel que revendiqué dans l'une quelconque des revendications précédentes, dans lequel lesdits deux fils de fibres de polyamide aromatique (202) et ledit fil de fibres de polyester et/ou de polyamide aliphatique (203) sont assemblés au moyen d'un procédé de torsion.

6. Pneu pour roues de véhicules tel que revendiqué dans l'une quelconque des revendications précédentes, dans lequel les torsions appliquées à chacun des fils de fibres de polyamide aromatique (202) sont supérieures à 150 torsions/m et inférieures à 400 torsions/m.

7. Pneu pour roues de véhicules tel que revendiqué dans l'une quelconque des revendications précédentes, dans lequel les torsions appliquées à chacun des fils de fibres de polyester ou de polyamide aliphatique (203) sont supérieures à 40 torsions/m et inférieures à 300 torsions/m.

8. Pneu pour roues de véhicules tel que revendiqué dans l'une quelconque des revendications précédentes, dans lequel la couche de ceinture circonférentielle radialement extérieure (106c) de la structure de ceinture (106) est présente essentiellement au niveau d'au moins une partie de sommet agencée à proximité des extrémités axiales du sommet du pneu (100).

9. Pneu pour roues de véhicules selon l'une quelconque des revendications 1 à 7, dans lequel la couche de ceinture circonférentielle radialement extérieure (106c) de la structure de ceinture (106) est essentiellement présente au niveau d'au moins une partie de sommet qui est agencée au centre par rapport au plan équatorial (X-X) du pneu (100), de préférence ladite partie de sommet est supérieure ou égale à au moins 50% de l'extension axiale du sommet du pneu (100).

10. Pneu pour roues de véhicules tel que revendiqué dans la revendication 8, dans lequel une couche de ceinture supplémentaire radialement superposée sur ladite couche de ceinture radialement extérieure (106c) de la structure de ceinture (106) agencée à proximité de chaque extrémité axiale de la structure de ceinture (106) s'étend axialement au niveau de chaque extrémité axiale du sommet pour une valeur inférieure ou égale à 25% de l'extension axiale du sommet.

11. Procédé pour augmenter les performances d'un véhicule à grande vitesse, comprenant le fait :
- d'obtenir des pneus (100) comprenant une structure de ceinture (106) comprenant une couche de ceinture circonférentielle radialement extérieure (106c) de la structure de ceinture (106) comprenant une pluralité de câblés de renfort hybrides (201) agencés selon un angle essentiellement nul par rapport au plan équatorial (X-X) du pneu (100), chacun desdits câblés de renfort hybrides (201) étant formé de deux fils de fibres de polyamide aromatique (202) et d'un fil de fibres de polyester et/ou de polyamide aliphatique (203), **caractérisé en ce que** chacun des fils de fibres de polyamide aromatique (202) a une densité linéaire comprise entre 1250 dTex et 1380 dTex et un module initial supérieur ou égal à 6000 cN/tex et inférieur ou égal à 8200 cN/tex mesurés conformément à la norme BISFA - Des procédés de test pour des fils de fibres de para-aramide, édition 2002,
- d'équiper un véhicule desdits pneus (100).

12. Procédé tel que revendiqué dans la revendication 11, dans lequel lesdits deux fils de fibres de polyamide aromatique (202) et ledit fil de fibres de polyester et/ou de polyamide aliphatique (203) sont assemblés au moyen d'un procédé de torsion.

13. Procédé tel que revendiqué dans la revendication 11 ou 12, dans lequel la couche de ceinture circonférentielle radialement extérieure (106c) de la structure de ceinture (106) est assemblée en enroulant un élément allongé continu (200) comprenant au moins l'un desdits câblés hybrides continus (201) le long d'une pluralité de spirales.

14. Procédé tel que revendiqué dans la revendication 13, dans lequel l'élément allongé continu (200) est enroulé de manière à avoir les spirales axialement adjacentes ou superposées de manière partiellement axiale.

15. Procédé tel que revendiqué dans la revendication 13 ou 14, dans lequel ledit élément allongé continu (200) comprend un nombre de câblés hybrides continus, côte à côte, parallèles (201) supérieur ou égal à 40 câblés/dm, de préférence inférieur ou égal à 120 câblés/dm de tissu recouvert de caoutchouc.
